# EUROPÄISCHE PATENTSCHRIFT

(11) **EP 3 290 309 B1**
(45) Veröffentlichungstag und Bekanntmachung des Hinweises auf die Patenterteilung: **18.03.2020**
(21) Anmeldenummer: 17188094.1
(22) Anmeldetag: 28.08.2017
(51) Int. Cl.: B62H 3/04, B62H 3/12

(54) **FAHRRAD-AUSSTELLUNGSSTÄNDER**
BICYCLE EXHIBITION STAND
PRÉSENTOIR POUR BICYCLETTE

(30) Priorität: 29.08.2016 DE 202016005478 U
(43) Veröffentlichungstag der Anmeldung: 07.03.2018
(73) Patentinhaber: Messingschlager GmbH & Co. KG, 96148 Baunach (DE)
(72) Erfinder: Messingschlager, Benno, 96148 Baunach (DE)
(74) Vertreter: Weickmann & Weickmann PartmbB

(56) Entgegenhaltungen:
- WO-A1-2011/019109
- WO-A1-2016/116701
- KR-B1- 100 880 390
- KR-B1- 101 548 516
- KR-Y1- 200 449 359

## Beschreibung

### I. Anwendungsgebiet

Die vorliegende Erfindung betrifft einen Fahrradständer, insbesondere einen Fahrrad-Ausstellungsständer, mit einer Ständeranordnung, die freistehend und selbsttragend ist, sodass der Fahrradständer an einer beliebigen Position in einem Raum oder auf einer Freifläche positioniert werden kann.

### II. Technischer Hintergrund

Fahrradständer mit verschiedenster Form und Gestalt sind aus dem Alltag bekannt. Zum Beispiel findet man solche vor öffentlichen Gebäuden oder in Fahrradkellern von Wohnhäusern. Sie dienen vor allem dazu, dass Fahrräder, die keinen eigenen Seitenständer aufweisen, nach dem Abstellen nicht umfallen. Auch können Fahrradständer genutzt werden, um mehrere Fahrräder möglichst platzsparend anzuordnen. Es gibt zum Beispiel an die Aufbewahrung von Fahrrädern in schmalen Kellerräumen angepasste Fahrradständer, die an einer Wand befestigt sind, um eine Halterung des Fahrrads in vertikaler Richtung, in der das Vorderrad über dem Hinterrad oder das Hinterrad über dem Vorderrad angeordnet ist, zu ermöglichen. Ferner sind für die Aufbewahrung von Fahrrädern Fahrradständer mit einer gebogenen Schiene bekannt, welche schräg verläuft und sich sowohl am Boden als auch an einer Wand abstützt oder an diesen befestigt ist. Die Räder des zu haltenden Fahrrads werden meist in einer einen halbkreisförmigen Querschnitt aufweisenden Schiene mit dessen Reifen gehalten.

Neben fest montierten Fahrradständern sind auch selbsttragende und freistehende Fahrradständer bekannt. Diese weisen im Allgemeinen einen Standfuß auf und können das Vorderrad oder das Hinterrad des Fahrrads in einer im Wesentlichen aufrechten Position halten. Bei bekannten Fahrradständern wird zu diesem Zweck das Vorderrad oder das Hinterrad zwischen zwei Stangen gehalten, wodurch ein Umkippen des sich zwischen den Stangen befindlichen Rads und folglich des gesamten Fahrrads verhindert wird.

Im Stand der Technik sind Dokumente KR 101 548 516 B1, das die Präambel des Anspruchs 1 offenbart, und WO 2011/019109 A1 zu finden, die solche Fahrradständer beschreiben.

Nachteilig ist bei herkömmlichen Fahrradständern die geringe Flexibilität, diese an unterschiedliche zur Verfügung stehende Räume oder auch unterschiedliche Fahrradtypen anzupassen. Zum Beispiel sind Fahrradständer, bei denen ein oder beide Räder des Fahrrads in einer Schiene oder zwischen zwei Stangen gehalten werden, nur für bestimmte Reifenbreiten geeignet. Oder ein für einen schmalen Kellerraum ausgelegter Fahrradständer, in welchem das Fahrrad in vertikaler Richtung gehalten werden kann, kann nicht gleichzeitig verwendet werden, um das Fahrrad in einer horizontalen Position, in der beide Räder sich in etwa einer Ebene befinden, zu lagern. Auch sind herkömmliche Fahrradständer nicht gleichermaßen an die Aufnahme von Fahrrädern mit kleinen Rahmengrößen, wie zum Beispiel Kinderräder, und an die Aufnahme von Fahrrädern mit großen Rahmengrößen, wie zum Beispiel Herrenräder, geeignet. Eine Anpassung des Fahrradständers an unterschiedlich zur Verfügung stehende Räume oder an die Aufnahme von Fahrrädern, die sich in ihrer Rahmengröße sowie ihrem Reifendurchmesser und ihrer Reifenbreite unterscheiden, ist in der Regel auch nicht erforderlich, da die einen Fahrradständer benötigende Person in der Regel einen für sich passenden Fahrradständer kauft und diesen anschließend nicht oder nur sehr selten für einen anderen Zweck, zum Beispiel für ein anderes Fahrrad oder einen anderen Aufbewahrungsort des Fahrrads, verwenden möchte.

Soll der Fahrradständer jedoch in Fahrradgeschäften oder auf Messen zur Präsentation von häufig wechselnden Fahrrädern genutzt werden, ist eine wiederholte Anpassung des Fahrradständers an unterschiedlich zur Verfügung stehende Räume, unterschiedlichen Platzbedarf sowie an sich in der Rahmengröße, der Reifenbreite, dem Rad- bzw. Reifendurchmesser usw. unterscheidende Fahrräder notwendig.

### III. Darstellung der Erfindung

### a) Technische Aufgabe

Es ist daher die Aufgabe der vorliegenden Erfindung, einen Fahrradständer zu entwickeln, der mit geringem Aufwand an einen unterschiedlich zum Haltern eines Fahrrads zur Verfügung stehenden Raum sowie an unterschiedliche Fahrräder angepasst werden kann.

### b) Lösung der Aufgabe

Diese Aufgabe wird mit einem Fahrradständer, insbesondere einem Fahrrad-Ausstellungsständer, mit den Merkmalen des Anspruchs 1 gelöst. Weitere Merkmale der Erfindung ergeben sich aus den Unteransprüchen.

Erfindungsgemäß wird ein Fahrradständer, insbesondere ein Fahrrad-Ausstellungsständer, vorgeschlagen, der eine freistehende und selbsttragende Ständeranordnung zur Aufnahme eines Rads eines Fahrrads aufweist. Der Fahrradständer weist ferner eine Halterstange und ein Halterungselement zum Haltern eines weiteren Rads des Fahrrads auf. Das Halterungselement ist an einem Ende der Halterstange angeordnet, welche mit der Ständeranordnung derart verbindbar ist, dass der Fahrradständer zwei Positionen zur Halterung des Fahrrads bereitstellt, eine horizontale Fahrrad-Halteposition und eine vertikale Fahrrad-Halteposition.

In der horizontalen Fahrrad-Halteposition verläuft die Längserstreckung des in dem Fahrradständer gehaltenen Fahrrads im Wesentlichen horizontal und das Rad oder das weitere Rad des Fahrrads wird von der Ständeranordnung in einer in etwa aufrechten Position gehaltert. Abweichungen von der horizontalen Position des Fahrrads können sich zum Beispiel ergeben, wenn das von der Ständeranordnung gehalterte Rad des Fahrrads nicht auf dem Untergrund steht, sondern leicht über diesem gehaltert wird, oder der Untergrund, auf welchem die Ständeranordnung steht, uneben ist. In der horizontalen Fahrrad-Halteposition kann das linear höhenverstellbare Halterungselement auf dessen geringste Höhe eingestellt werden, um nicht zu stören, insbesondere nicht als mechanisches Hindernis zu wirken, oder, um nicht in das Blickfeld eines Betrachters zu fallen oder hinter dem Fahrradständer befindliche Elemente zu verdecken, zum Beispiel, wenn der Fahrradständer als Ausstellungsständer verwendet wird.

In der vertikalen Fahrrad-Halterposition verläuft die Längserstreckung des Fahrrads im Wesentlichen vertikal und das Rad oder das weitere Rad des Fahrrads wird von der Ständeranordnung und das weitere Rad oder das Rad des Fahrrads von dem Halterungselement gehaltert. Das Halterungselement und die dieses tragende Halterstange sind linear höhenverstellbar, sodass das Halterungselement in dessen Lage für eine Halterung des Fahrrads in der vertikalen Fahrrad-Halteposition an die Länge des zu halternden Fahrrads angepasst werden kann.

Aufgrund der freistehenden und selbsttragenden Ständeranordnung kann der Fahrradständer frei im Raum positioniert werden. Eine stabile Wand zur Befestigung des Fahrradständers wird folglich nicht benötigt. Des Weiteren kann der Fahrradständer mittels der zwei zur Verfügung stehenden Fahrrad-Haltepositionen entsprechend dem zur Verfügung stehenden Platz eingesetzt werden.

Der erfindungsgemäße Fahrradständer, bei dem das Halterungselement und die Halterstange linear höhenverstellbar sind, kann zur Halterung von Fahrrädern mit unterschiedlichsten Laufradgrößen, wie z.B. Kinderräder mit Laufradgrößen von 10 bis 14 Zoll oder Jugendräder mit mittleren Laufradgrößen von beispielsweise 14 bis 20 Zoll oder auch Fahrräder für Erwachsene mit größeren Laufradgrößen von beispielsweise 20 bis 29 Zoll, verwendet werden.

Ein im Sinne der Erfindung ausgebildetes Halterungselement zeichnet sich vor allem dadurch aus, dass dieses in einen Bereich des Rads oder des weiteren Rads des Fahrrads, der von zwei benachbarten Speichen und der Felge des Rads oder des weiteren Rads definiert ist, eingreifen kann. Das Halterelement kann folglich unabhängig von dem Rad-/Reifen-/Felgendurchmesser sowie der Rad-/Reifen-/Felgendicke eingesetzt werden.

Vorteilhafterweise ist in der vertikalen Fahrrad-Halteposition die Ständeranordnung dazu eingerichtet, das Hinterrad des Fahrrads aufzunehmen und das Halterungselement dazu eingerichtet, in den Bereich des Vorderrads des Fahrrads einzugreifen. Eine derartige vertikale Fahrrad-Halteposition ermöglicht ein einfaches Einbringen des Fahrrads in den Fahrradständer, indem das Fahrrad soweit aufgerichtet wird, dass dieses auf dem Hinterrad steht, anschließend das Hinterrad in die Ständeranordnung gerollt wird und danach das Vorderrad zur Seite gekippt wird, sodass das vorzugsweise hakenartige Halterungselement in den Bereich zwischen zwei benachbarten Speichen und der Felge eingeführt werden kann, und dann das Fahrrad, nachdem das Vorderrad nach hinten in den Haken gesunken ist, von dem Fahrradständer gehalten wird.

Sollte das Hinterrad zum Beispiel zu Ausstellungszwecken auf Augenhöhe des Betrachters angeordnet werden sollen, kann die Ständeranordnung in der vertikalen Fahrrad-Halteposition dazu eingerichtet sein, das Vorderrad aufzunehmen, und das Halterungselement dazu eingerichtet sein, in den Bereich des Hinterrads des Fahrrads einzugreifen.

Eine stabile und standhafte Ständeranordnung kann erzielt werden, wenn diese wenigstens eine Querstange und eine an einem Befestigungspunkt an der wenigstens einen Querstange befestigte Hauptstange umfasst, die sich von dem Befestigungspunkt ausgehend in zwei Richtungen erstreckt. Die Querstange verläuft dementsprechend quer zu der Hauptstange und liegt vorzugsweise auf dem Untergrund auf. Eventuell an die Querstange angebrachte Gummierungen können ein Wegrutschen oder ein Verrutschen auf dem Untergrund vermeiden. Ein dritter Auflagepunkt auf dem Untergrund kann von der Hauptstange bereitgestellt werden oder zwei weitere Auflagepunkte können durch eine weitere Querstange, die mit der Hauptstange verbunden ist und vorzugsweise auch auf dem Untergrund aufliegt, bereitgestellt werden.

Die Hauptstange ist in zwei Teilbereiche aufgeteilt, welche sich von dem Befestigungspunkt aus in unterschiedliche Richtungen erstrecken. In einem ersten Teilbereich der Hauptstange ist diese gerade und erstreckt sich im Wesentlichen vertikal und in einem zweiten Teilbereich der Hauptstange weist diese eine Biegung auf. Der Winkel, welcher zwischen den Teilbereichen der Hauptstange, die sich von dem Befestigungspunkt der Hauptstange an der Querstange weg erstrecken, beträgt ≤ 90°. Um das Rad oder das weitere Rad des Fahrrads in der Ständeranordnung aufzunehmen, umfasst diese ferner eine Hilfsstange, welche derart angeordnet ist, dass zwischen der Haupt- und der Hilfsstange das Rad oder das weitere Rad des Fahrrads aufgenommen werden kann.

Die Hauptstange weist in ihrer vertikalen Erstreckung, also in dem ersten Teilbereich, einen Hohlraum auf, welcher dazu eingerichtet ist, die Halterstange derart aufzunehmen, dass ein Ausziehabstand zwischen dem Ende der Hauptstange und dem das Halterungselement aufweisenden Ende der Halterstange einstellbar ist. In dieser Lagerung der Hauptstange sind demnach die Hauptstange und die Halterstange teleskopierbar, um das an einem Ende der Hauptstange angebrachte Halterungselement in der Höhe verstellen zu können. Mittels dieser Höhenverstellung kann der Fahrradständer an sich in deren Größe unterscheidende Fahrräder angepasst werden. Auch wird ermöglicht, dass die Halterstange, bei der horizontalen Halterung des Fahrrads eingefahren werden kann, sodass diese kein nach oben ragendes, störendes, mechanisches Hindernis bilden kann und im Übrigen bei der Betrachtung eines horizontal gehaltenen Fahrrads den Betrachter nicht stört bzw. durch die Halterstange und dessen Halterungselement keine sich eventuell dahinter befindlichen Gegenstände verdeckt werden.

In vorteilhafter Weise können Befestigungsmittel vorgesehen sein, um die Halterstange, wenn deren Ausziehabstand eingestellt ist, zu fixieren. Vorteilhafterweise kann diese Fixierung für jeden einstellbaren Ausziehabstand stufenlos erfolgen.

Um eine eine einfache Bedienbarkeit ermöglichende Fixierung des eingestellten Ausziehabstands zu ermöglichen, handelt es sich vorteilhafterweise bei den Befestigungsmitteln um eine ohne Werkzeug betätigbare Rändelschraube. Ein Abschnitt dieser durchsetzt vorteilhafterweise eine Aussparung der Hauptstange, sodass zum Festklemmen der Halterstange die Rändelschraube gegen die Halterstange schraubbar ist.

Nach einer vorteilhaften Weiterbildung der Erfindung ist vorgesehen, die Hauptstange und die Hilfsstange mittels wenigstens eines Verbindungselements miteinander zu verbinden, dessen Länge veränderbar ist. Auch können anstelle einer veränderbaren Länge des Verbindungselements mehrere Verbindungselemente mit variabler Länge bereitgestellt sein. Mittels der veränderlichen Länge des Verbindungselements kann der Abstand zwischen der Haupt- und der Hilfsstange, zwischen welche das erste oder das weitere Rad aufgenommen wird, verändert werden. Dies ermöglicht eine Anpassung des Fahrradständers zur Aufnahme von Rädern mit unterschiedlichen Reifenbreiten, sodass ein seitliches Wegkippen des sich zwischen der Haltestange und der Hilfsstange befindlichen Rads verhindert wird. Vorteilhafterweise sind die Verbindungselemente derart in deren Länge veränderbar oder mit solchen Längen bereitgestellt, dass unterschiedliche Reifenbreiten, wie zum Beispiel von Rennrad-Reifen, Stadtrad-Reifen, Trekkingrad-Reifen, Mountainbike-Reifen oder Fat-Bike-Reifen, aufgenommen werden können.

Es hat sich als vorteilhaft erwiesen, die Ständeranordnung des Fahrradständers möglichst stabil auszubilden, um einen sicheren Halt gewährleisten zu können, z.B. in Situationen, in denen Personen unbeabsichtigt gegen den Fahrradständer oder ein in dem Fahrradständer gehaltenes Fahrrad kommen. Zu diesem Zweck können die Haupt- und Hilfsstange an einem jeweiligen Befestigungspunkt mit der Querstange verbunden sein. Um dennoch den Fahrradständer an verschiedene Reifenbreiten anzupassen, kann die Beabstandung der Befestigungspunkte und folglich die Beabstandung zwischen Haupt- und Hilfsstange veränderbar sein und vorzugsweise mit der Länge der Verbindungselemente im Wesentlichen übereinstimmen. Des Weiteren kann zumindest die Hauptstange mit einer an dieser angebrachten Strebe verstärkt sein, die den ersten und den zweiten Teilbereich der Hauptstange verbindet.

Ein im Sinne der Erfindung ausgebildeter Fahrradständer, der flexibel an unterschiedlichste Größen und Typen von Fahrrädern anpassbar ist, kann zwei Verbindungselemente in dem zweiten Teilbereich der Hauptstange aufweisen, die die Haupt- und Hilfsstange miteinander verbinden. Der Abstand der beiden Verbindungselemente voneinander ist einstellbar, wodurch der Fahrradständer an die Aufnahme von Fahrrädern mit verschiedenen Rad-/Reifendurchmessern angepasst werden kann. Die zwei Verbindungselemente verhindern eine Rollbewegung des zwischen diesen aufgenommenen Rades in der Fahrradrahmenebene. Folglich kann durch die Einstellbarkeit des Abstands der Verbindungselemente eine Anpassung an verschiedene Rad- bzw. Reifendurchmesser erfolgen. Wäre dies nicht der Fall, könnten zum Beispiel sehr kleine Rad- bzw. Reifendurchmesser, wie z.B. von Kinderrädern, zwischen den Verbindungselementen hin und her rollen oder sehr große Raddurchmesser, wie z.B. Räder mit einem Durchmesser von 29 Zoll auf den Verbindungselementen leicht hin und her rollen. Ein sicherer Stand ist folglich nur möglich, wenn die Verbindungselemente auf den Rad- bzw. Reifendurchmesser des zu haltenden Fahrrads angepasst werden kann.

In diesem Zusammenhang ist es besonders vorteilhaft, wenn wenigstens eines der beiden Verbindungselemente mit der Hauptstange und der Hilfsstange lösbar verbunden ist.

Vorteilhafterweise sind beide Verbindungselemente mit verschiedenen Längen bereitgestellt. Dadurch kann der Fahrradständer sowohl zur Aufnahme von Fahrrädern mit Rädern mit verschiedenen Rad- bzw. Reifendurchmessern als auch mit verschiedenen Reifenbreiten angepasst werden.

Vorteilhafterweise sind ebenso die beiden Verbindungselemente zweiteilig ausgeführt, wobei die beiden Teile derart ineinander eingreifen, dass die Länge jedes Verbindungselements in teleskopierbarer Weise veränderbar ist. Dies ermöglicht eine schnelle und einfache Anpassung der Länge der Verbindungselemente, sodass der Fahrradständer innerhalb kürzester Zeit an die Reifenbreite des aufzunehmenden Fahrrads angepasst werden kann.

Es hat sich als vorteilhaft erwiesen, zwei Ausführungsformen der teleskopierbaren Verbindungselemente bereitzustellen. Dabei kann in einer ersten Ausführungsform im montierten Zustand eine Beabstandung der Hauptstange von der Hilfsstange zumindest in dem zweiten Teilbereich der Hauptstange zwischen 50 mm und 90 mm und in einer zweiten Ausführungsform zwischen 100 mm und 150 mm vorgesehen sein. Mittels der ersten Ausführungsform können somit zum Beispiel Fahrräder mit eher schmalen Reifen, wie zum Beispiel Rennrad-Reifen mit einer typischen Breite von etwa 23 mm bis 28 mm, typische Stadtrad-Reifen mit einer Breite von in etwa 30 mm bis 40 mm oder auch Mountainbike-Reifen mit einer typischen Breite von etwa 35 mm bis zu 60 mm, aufgenommen werden. Die zweite Ausführungsform ist hingegen an die Aufnahme von eher breiteren Mountainbike-Reifen, wie beispielsweise 27,5"+ Reifen, oder Fat-Bike-Reifen angepasst.

Für eine einfache Herstellbarkeit des Fahrradständers kann die Hauptstange einstückig hergestellt sein oder für einen einfachen Transport des Fahrradständers kann die Hauptstange aus einer Mehrzahl von Einzelstangen und einem oder mehreren Zwischenelementen zusammenfügbar sein. Eine kostengünstige Herstellung des Fahrradständers könnte zum Beispiel dadurch erreicht werden, dass die Haupt- und die Hilfsstange sich in ihrer Formgebung gleichen bzw. identisch sind. Für einen flexiblen Einsatz des Fahrradständers weist die Hilfsstange gleichermaßen wie die Hauptstange einen Hohlraum auf, der zur Aufnahme der Halterstange geeignet ist.

### c) Ausführungsbeispiele

Nachfolgend werden Ausführungsbeispiele der vorliegenden Erfindung beispielhaft anhand der Zeichnungen beschrieben. Es zeigen:
- Fig. 1:: eine perspektivische Ansicht eines ersten Ausführungsbeispiels eines erfindungsgemäßen Fahrradständers mit eingezogener Halterstange;
- Fig. 2:: eine perspektivische Ansicht eines zweiten Ausführungsbeispiels eines erfindungsgemäßen Fahrradständers mit eingezogener Halterstange;
- Fig. 3:: eine perspektivische Ansicht eines dritten Ausführungsbeispiels eines erfindungsgemäßen Fahrradständers mit ausgezogener Halterstange;
- Fig. 4:: eine Explosionsdarstellung eines erfindungsgemäßen Fahrradständers gemäß dem dritten Ausführungsbeispiel;
- Fig. 5a-c):: einen erfindungsgemäßen Fahrradständer gemäß dem dritten Ausführungsbeispiel in Draufsicht a), in Frontansicht b) und in Seitenansicht c);
- Fig. 6a-b):: einen erfindungsgemäßen Fahrradständer, in dem in a) ein Mountainbike und in b) ein Kinderfahrrad jeweils in einer vertikalen Fahrrad-Halteposition aufgenommen ist;
- Fig. 7:: einen erfindungsgemäßen Fahrradständer, in dem ein Fahrrad in der horizontalen Fahrrad-Halteposition in dem Fahrradständer aufgenommen ist; und
- Fig. 8a-b):: mehrere Frontansichten eines erfindungsgemäßen Fahrradständers mit unterschiedlicher Beabstandung von Haupt- und Hilfsstange.

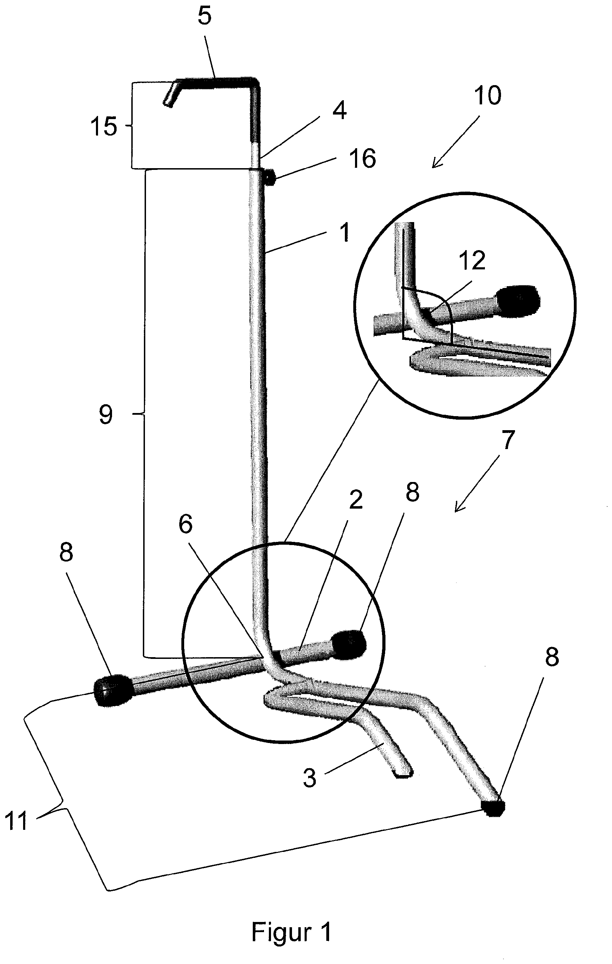

Figur 1 zeigt eine perspektivische Ansicht eines Fahrradständers 10, welcher eine Ständeranordnung 7 mit einer Hauptstange 1, einer Querstange 2, einer Hilfsstange 3 sowie einer Halterstange 4, an welcher ein Halterungselement 5 angebracht ist, umfasst. Die Hauptstange 1 ist mit der Querstange 2 an einem Befestigungspunkt 6 verbunden. Die Ständeranordnung 7 ist mittels der drei Auflagepunkte 8, wovon zwei von der Querstange ausgebildet sind und einer von der Hauptstange ausgebildet ist, freistehend und selbsttragend.

Die Hauptstange 1 erstreckt sich von dem Befestigungspunkt 6 aus in zwei Richtungen und ist somit durch den Befestigungspunkt 6 unterteilt in einen ersten Teilbereich 9 und einen zweiten Teilbereich 11. Wie in Fig. 1 ersichtlich, erstreckt sich der erste Teilbereich 9 der Hauptstange 1 in vertikaler Richtung und der zweite Teilbereich 11 der Hauptstange 1 weist eine Biegung auf. Die sich von dem Befestigungspunkt 6 erstreckenden Teilbereiche 9, 11 der Hauptstange 1 bilden einen Winkel 12, welcher kleiner als 90° ist.

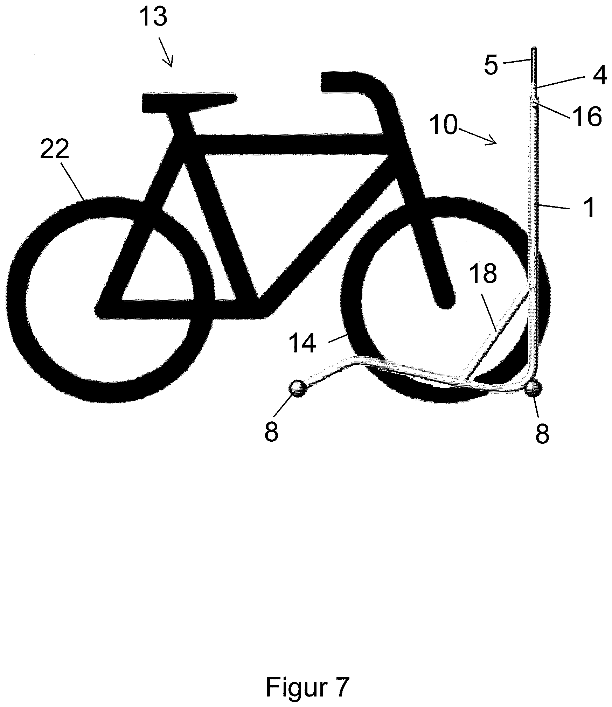

Ein Fahrrad 13 kann mit dessen Vorderrad 14 in der Ständeranordnung 7 zwischen der Hauptstange 1 und der Hilfsstange 3 aufgenommen werden, wie zum Beispiel in Fig. 7 ersichtlich. Zu diesem Zweck verläuft die Hilfsstange 3 in dem zweiten Teilbereich 11 der Hauptstange 1 zumindest teilweise parallel zu der Hauptstange 1 und ermöglicht es das Vorderrad 14 des Fahrrads 13 vor dem Wegrollen zu sichern und gleichzeitig seitlich zu stabilisieren, sodass dieses nicht zur Seite kippen kann.

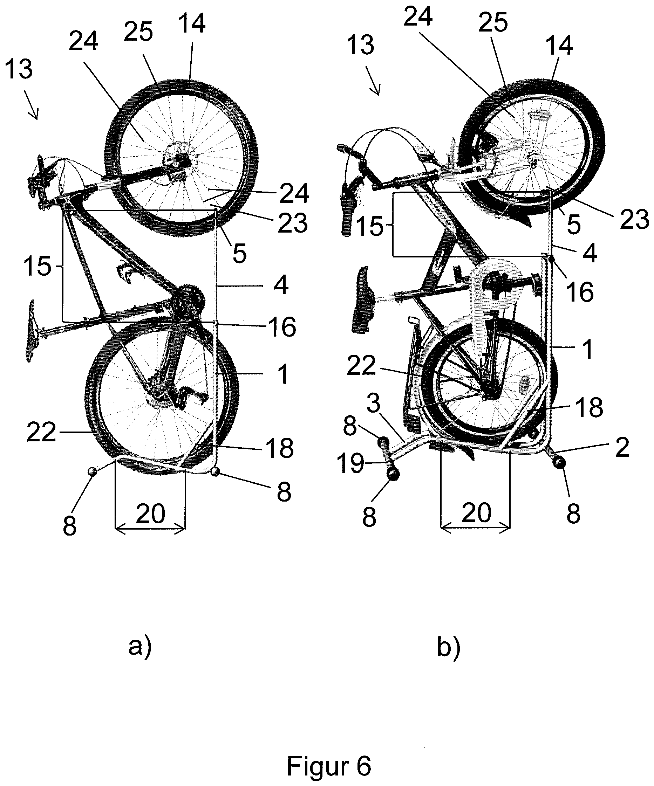

Um ein Fahrrad 13 in einer vertikalen Fahrrad-Halteposition in den Fahrradständer aufzunehmen, wie beispielsweise in Fig. 6 gezeigt, kann die in der Hauptstange 1 aufgenommene Halterstange 4 nach oben ausgezogen werden und mit dessen Halterelement 5 in einen Bereich 23 zwischen zwei benachbarten Speichen 24 und einer Felge 25 des Vorderrads 14 eingreifen. Ein Hinterrad 22 des Fahrrads 13 wird in der in Fig. 6 dargestellten vertikalen Fahrrad-Halteposition von der Ständeranordnung 7 gehalten.

Die Halterstange 4 ist in den dargestellten Ausführungsbeispielen mit einem runden Querschnitt ausgebildet und kann in das nach oben hin offene und hohle Rohr der Hauptstange 1, welches ebenso einen runden Querschnitt aufweist, eingesetzt werden. Die Halterstange 4 ist höhenverstellbar, indem diese unterschiedlich weit aus der Hauptstange 1 herausziehbar ist. Es ergeben sich folglich unterschiedliche Ausziehabstände 15 zwischen dem Ende der Halterstange 4, an der das Halterungselement 5 angebracht ist, und dem Ende des ersten Teilbereichs 9 der Hauptstange 1. Wie in Fig. 6 ersichtlich, kann mittels des einstellbaren Ausziehabstands 15 der Fahrradständer an Fahrräder mit unterschiedlicher Größe angepasst werden. Die Halterstange 4 kann, nachdem der gewünschte Ausziehabstand 15 eingestellt ist, mittels eines Befestigungsmittels 16, welches als Rändelschraube 16 dargestellt ist, fixiert werden. Ein Abschnitt der Rändelschraube 16 durchsetzt dabei die Hauptstange 1 und drückt derart gegen die Halterstange 4, dass diese fixiert ist.

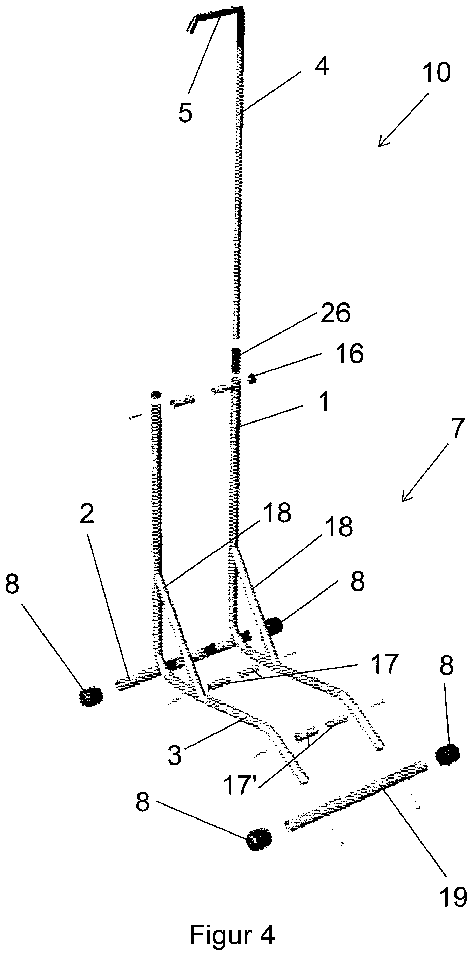

Eine Hülse 26 (Fig. 4), die in die nach oben hin offene Hauptstange 1 eingesetzt ist, kann die Gleiteigenschaften zwischen Hauptstange 1 und Halterstange 4 verbessern. Dabei sollte die Hülse 26 eine Aussparung aufweisen, die mit der für die Rändelschraube vorgesehenen Aussparung der Hauptstange in Flucht gebracht werden kann, sodass die Rändelschraube im festgezogenen Zustand gegen die Halterstange 4 drückt.

Das Halterungselement 5, welches, wie in Fig. 6 gezeigt, in das Vorderrad 14 oder das Hinterrad 22 des Fahrrads 13 eingreifen kann, ist hakenförmig bzw. L-förmig ausgebildet und, um die Speichen 24 bzw. die Felge 25 des Fahrrads 13 nicht zu zerkratzen, gummiert.

Für einen sicheren Halt des Fahrradständers 10 sind die Auflagepunkte 8 ebenso gummiert oder mit Gummikappen versehen.

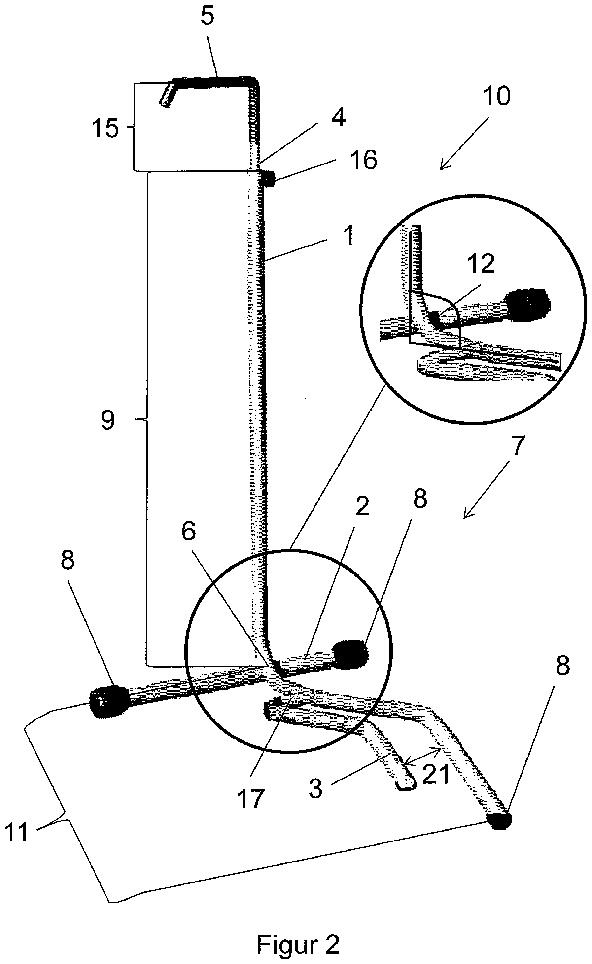

In Figur 2 kennzeichnen gleiche Bezugszeichen gleiche Teile wie in Fig. 1. Das in Fig. 2 gezeigte Ausführungsbeispiel unterscheidet sich von dem in Fig. 1 gezeigten Ausführungsbeispiel durch ein Verbindungselement 17, welches die Hauptstange 1 und die Hilfsstange 3 verbindet. In Figur 1 ist die Hilfsstange 3 stattdessen an die Hauptstange 1 angeschweißt.

Das Verbindungselement 17 dient einer Beabstandung 21 der Hilfsstange 3 von der Hauptstange 1. Zur Anpassung der Beabstandung 21 an unterschiedliche Reifenbreiten ist das Verbindungselement 17 zweiteilig ausgeführt und in dessen Länge, zum Beispiel mittels zweier teleskopierbarer Teilstangen, veränderbar. Die Länge des Verbindungselements 17 definiert im Wesentlichen die Beabstandung 21 von Haupt- und Hilfsstange 1, 3. Abweichungen zwischen der Beabstandung 21 von Haupt- und Hilfsstange 1, 3 und der Länge des Verbindungselements 17 können sich beispielsweise durch die Montage oder durch die Verwendung von Unterlegescheiben ergeben.

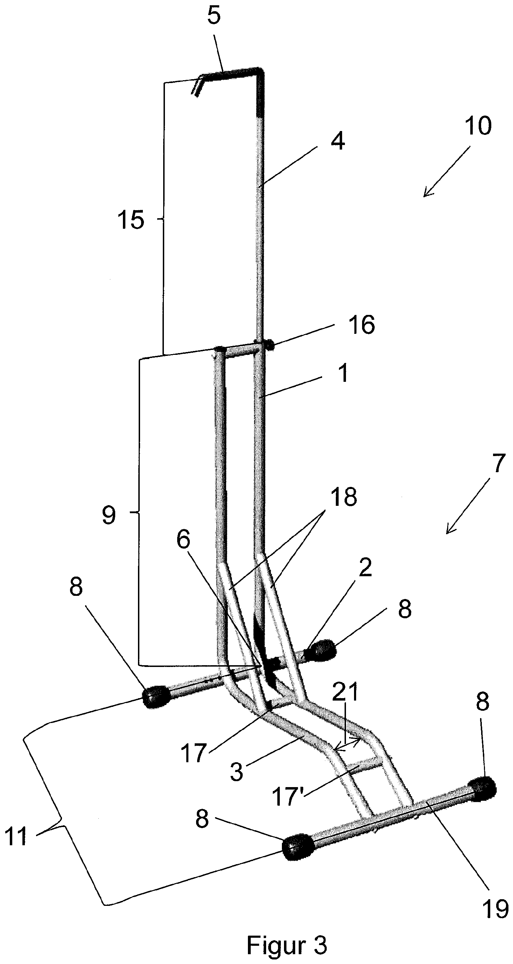

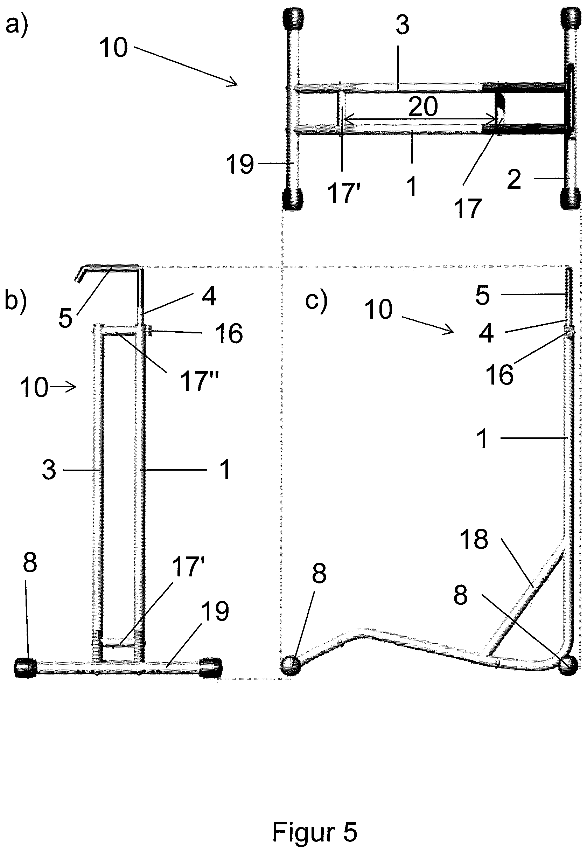

Das in den Figuren 3 bis 5 dargestellte dritte Ausführungsbeispiel zeigt eine stabilere Ausführung des Fahrradständers 10 im Vergleich zu den in den Figuren 1 und 2 gezeigten Ausführungsbeispielen. Gleiche Bezugszeichen kennzeichnen gleiche Teile wie in den Figuren 1 und 2. Vorangehend eingeführte Bauteile und Funktionen sind in dem dritten Ausführungsbeispiel gleichermaßen enthalten.

Wie in der perspektivischen Ansicht der Fig. 3 zu erkennen, ist die Hauptstange 1 mittels einer Strebe 18, die mit der Hauptstange 1 sowohl in dem ersten Teilbereich 9 als auch in dem zweiten Teilbereich 11 der Hauptstange 1 verschweißt ist, stabilisiert. Des Weiteren ist die Hauptstange 1 an deren Ende in dem zweiten Teilbereich 11 mit einer weiteren Querstange 19 verbunden. Der Fahrradständer 10 gemäß dem dritten Ausführungsbeispiel weist folglich vier Auflagepunkte 8 auf.

Gemäß dem in Figur 3 dargestellten Ausführungsbeispiel gleichen sich die Haupt- und Hilfsstange 1,3 in deren Form. Auch weist die Hilfsstange 3 eine diese stabilisierende Strebe 18 auf. Es ist an dieser Stelle auch denkbar, dass die Hilfsstange 3, gleichermaßen wie die Hauptstange 1, eine Aufnahme für die Halterstange 4 und das an diese angebrachte Halterelement 5 aufweist.

Die Haupt- und Hilfsstange 1, 3 sind mittels zwei Verbindungselementen 17, 17', deren in Fig. 6a) gekennzeichneter Abstand 20 voneinander veränderbar ist, verbunden. Dabei ist es für die Erfindung unerheblich, ob der Abstand 20 veränderbar ist, indem nur eines der beiden Verbindungselemente 17, 17' oder beide Verbindungselemente 17, 17' an unterschiedlichen Positionen an der Haupt- und Hilfsstange 1, 3 befestigt werden können. Die Befestigung der Verbindungselemente 17, 17' an der Haupt- und Hilfsstange 1, 3 kann stufenlos, beispielsweise mittels nicht dargestellter Schienen, erfolgen oder es können, wie in Fig. 3 gezeigt, mehrere diskrete Befestigungspunkte vorhanden sein.

Der Abstand 20 der Verbindungselemente 17, 17' voneinander liegt in einem Bereich von 220 mm bis 330 mm, vorzugsweise von 235 mm bis 315 mm. Somit kann der Abstand 20 an unterschiedliche Raddurchmesser angepasst werden, wie zum Beispiel in Fig. 6a) für ein Erwachsenen-Mountainbike und in Fig. 6b) für ein Kinder-/Jugendfahrrad gezeigt.

Des Weiteren kann zusätzlich in dem ersten Teilbereich 9 der Hauptstange 1 ein zusätzliches Verbindungselement 17" zwischen Haupt- und Hilfsstange 1,3 vorhanden sein, um die Stabilität des Fahrradständers 10 weiter zu erhöhen.

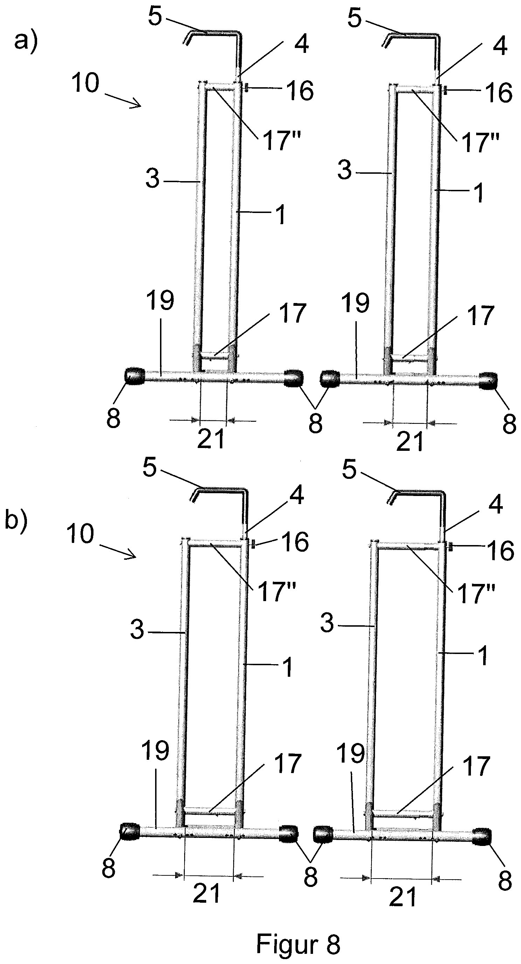

Wie in Fig. 8 gezeigt, können alle Verbindungselemente 17, 17', 17" zwischen der Haupt- und Hilfsstange 1, 3 teleskopierbar sein, sodass die Beabstandung 21 zwischen Haupt- und Hilfsstange 1, 3 veränderbar ist. Die beiden Fahrradständer 10 in Fig. 8 a) zeigen Verbindungselemente17, 17', 17", welche eine Beabstandung 21 von zum Beispiel 60 mm und zum Beispiel 80 mm ermöglichen. Die beiden Fahrradständer 10 in Fig. 8 b) zeigen eine zweite Ausführungsform der Verbindungselemente 17, 17', 17", die eine Beabstandung 21 von Haupt- und Hilfsstange 1, 3 von zum Beispiel 115 mm und zum Beispiel 135 mm ermöglichen. Eine Beabstandung 21 von Haupt- und Hilfsstange 1, 3 von ca. 60 mm ermöglicht die Aufnahme von Reifenbreiten bis 2,25 Zoll, eine Beabstandung 21 von ca. 80 mm ermöglicht eine Aufnahme einer Reifenbreite bis 3,0 Zoll, eine Beabstandung 21 von in etwa 115 mm erlaubt eine Aufnahme von Reifen mit einer Reifenbreite von 4,5 Zoll und eine Beabstandung 21 von 135 mm ermöglicht eine Aufnahme von Reifen mit einer Breite von 5,3 Zoll.

Mittels der Einstellung des Abstands 20, der Beabstandung 21 sowie des Ausziehabstands 15 ist der erfindungsgemäße Fahrradständer 10 zur Aufnahme unterschiedlichster Fahrräder anpassbar, die sich hinsichtlich ihres Rad-/Reifendurchmessers, ihrer Reifenbreite und ihrer Rahmengröße unterscheiden.

Wie in Fig. 4 ersichtlich, können die Verbindungselemente 17, 17', 17" mittels Schrauben mit der Haupt- und Hilfsstange 1, 3 verbunden sein und die Haupt- und Hilfsstange 1, 3 können ebenso mittels Schraubverbindungen mit den Querstangen 2, 19 verbunden sein. In einer nicht dargestellten Variante des Fahrradständers ist die Hauptstange mit den Querstangen sowie einem Verbindungselement des ersten Teilbereichs 9 und, wenn vorhanden, einem Verbindungselement des zweiten Teilbereichs 11 unlösbar fest verbunden, beispielsweise verschweißt.

Die in den Figuren 1 bis 8 dargestellte Ständeranordnung weist eine Relation zwischen dem ersten Teilbereich 9 und dem zweiten Teilbereich 11 der Hauptstange 1 von in etwa 1:0,75 auf. Auch sind Relationen von 1:0,75 bis 1:1 oder bis 1:1,25 denkbar. Bei einer nicht dargestellten Ausführungsform, bei der der erste Teilbereich 9 verkürzt ist, also eine Relation von 1:1 bis 1:1,25 vorliegt, kann die vertikale Halterung von großen Fahrrädern ggf. nur möglich sein, wenn die ausziehbare Halterstange aus mehr als zwei Stangen, welche teleskopierbar sind, hergestellt ist.

### BEZUGSZEICHENLISTE

- 1: Hauptstange
- 2: Querstange
- 3: Hilfsstange
- 4: Halterstange
- 5: Halterelement
- 6: Befestigungspunkt
- 7: Ständeranordnung
- 8: Auflagepunkte
- 9: erster Teilbereich der Hauptstange
- 10: Fahrradständer
- 11: zweiter Teilbereich der Hauptstange
- 12: Winkel
- 13: Fahrrad
- 14: Vorderrad
- 15: Ausziehabstand
- 16: Befestigungsmittel, Rändelschraube
- 17, 17', 17": Verbindungselement
- 18: Strebe
- 19: weitere Querstange
- 20: Abstand
- 21: Beabstandung
- 22: Hinterrad
- 23: Bereich
- 24: Speiche
- 25: Felge
- 26: Hülse

## Patentansprüche

1. Fahrradständer (10), insbesondere Fahrrad-Ausstellungsständer, mit einer freistehenden und selbsttragenden Ständeranordnung (7) zur Aufnahme eines Rads eines Fahrrads (13), wobei
ein Halterungselement (5) zum Haltern eines weiteren Rads des Fahrrads (13) mittels einer Halterstange (4), die an einem Ende das Halterungselement (5) aufweist, mit der Ständeranordnung (7) verbindbar ist, sodass der Fahrradständer (10) zwei Positionen zur Halterung des Fahrrads (13) bereitstellt, eine horizontale Fahrrad-Halteposition und eine vertikale Fahrrad-Halteposition, wobei
- in der horizontalen Fahrrad-Halteposition die Längserstreckung des Fahrrads im Wesentlichen horizontal verläuft und das Rad (14; 22) oder das weitere Rad (22; 14) des Fahrrads (13) von der Ständeranordnung (7) in einer in etwa aufrechten Position gehaltert wird,
- in der vertikalen Fahrrad-Halteposition die Längserstreckung des Fahrrads (13) im Wesentlichen vertikal verläuft und das Rad (14; 22) oder das weitere Rad (22; 14) des Fahrrads (13) von der Ständeranordnung (7) und das weitere Rad (22; 14) oder das Rad (14; 22) des Fahrrads (13) von dem Halterungselement (5) gehaltert wird, und
- das Halterungselement (5) und die Halterstange (4) linear höhenverstellbar sind,
wobei die Ständeranordnung (7) umfasst:
- wenigstens eine Querstange (2),
- eine an einem Befestigungspunkt (6) der einen Querstange (2) befestigte Hauptstange (1), die sich von dem Befestigungspunkt (6) ausgehend in zwei Richtungen erstreckt, wobei
- ein Winkel (12), der zwischen den sich von dem Befestigungspunkt (6) weg erstreckenden Teilbereichen (9, 11) der Hauptstange (1) ausgebildet ist, kleiner gleich 90° beträgt,
- ein erster Teilbereich (9) der Hauptstange (1) gerade ist und sich im Wesentlichen vertikal erstreckt und
- ein zweiter Teilbereich (11) der Hauptstange (1) eine Biegung aufweist, und
- eine Hilfsstange (3), welche derart angeordnet ist, dass das Rad oder das weitere Rad des Fahrrads (13) zwischen der Haupt- und Hilfsstange (1, 3) aufgenommen werden kann,
und wobei die Hauptstange (1) in deren vertikaler Erstreckung einen Hohlraum aufweist, welcher dazu eingerichtet ist, die Halterstange (4) derart aufzunehmen, dass ein Ausziehabstand (15) zwischen dem Ende der Hauptstange (1) und dem das Halterungselement (5) aufweisenden Ende der Halterstange (4) einstellbar ist,
**dadurch gekennzeichnet, dass**
die Hilfsstange (3) einen Hohlraum aufweist, der dem der Hauptstange (1) entspricht und zur Aufnahme der Halterstange (4) geeignet ist.

2. Fahrradständer (10) nach Anspruch 1,
**dadurch gekennzeichnet, dass**
das Halterungselement (5) ein Hakenelement (5) ist, welches in einen Bereich (23) des Rads oder des weiteren Rads des Fahrrads (13), der von zwei benachbarten Speichen (24) und der Felge (25) des Rads oder des weiteren Rads definiert ist, eingreifen kann.

3. Fahrradständer (10) nach einem der vorhergehenden Ansprüche,
**dadurch gekennzeichnet, dass**
in der vertikalen Fahrrad-Halteposition die Ständeranordnung (7) dazu eingerichtet ist, das Hinterrad (22) oder das Vorderrad (14) des Fahrrads (13) aufzunehmen, und das Halterungselement (5) dazu eingerichtet ist, in das Vorderrad (14) oder das Hinterrad (22) des Fahrrads (13) einzugreifen.

4. Fahrradständer (10) nach einem der vorhergehenden Ansprüche,
**dadurch gekennzeichnet, dass**
Befestigungsmittel (16) vorgesehen sind, um die Halterstange (4), wenn der Ausziehabstand (15) eingestellt ist, zu fixieren.

5. Fahrradständer (10) nach einem der vorhergehenden Ansprüche,
**dadurch gekennzeichnet, dass**
die Hauptstange (1) und die Hilfsstange (3) mittels wenigstens eines Verbindungselements (17, 17', 17") miteinander verbunden sind, dessen Länge veränderbar ist, und/oder mehrere Verbindungselemente (17, 17', 17") mit variabler Länge bereitgestellt sind.

6. Fahrradständer (10) nach Anspruch 5,
**dadurch gekennzeichnet, dass**
die Haupt- und Hilfsstange (1, 3) an einem jeweiligen Befestigungspunkt (6) mit der Querstange (2) verbunden sind, wobei die Beabstandung (21) der Befestigungspunkte (6) und folglich die Beabstandung (21) zwischen Haupt- und Hilfsstange (1, 3) veränderbar ist und vorzugsweise mit der Länge des oder der mehreren Verbindungselemente (17, 17', 17") im Wesentlichen übereinstimmt.

7. Fahrradständer (10) nach einem der vorhergehenden Ansprüche,
**dadurch gekennzeichnet, dass**
die Hauptstange (1) mit einer an dieser angebrachten Strebe (18) verstärkt ist, wobei die Strebe (18) den ersten (9) und den zweiten Teilbereich (11) der Hauptstange (1) verbindet.

8. Fahrradständer (10) nach einem der Ansprüche 5 bis 7,
**dadurch gekennzeichnet, dass**
zwei Verbindungselemente (17, 17') den zweiten Teilbereich der Hauptstange (1) mit der Hilfsstange (3) verbinden und der Abstand (20) der Verbindungselemente (17, 17') voneinander zur Anpassung des Fahrradständers (10) an die Aufnahme von verschiedenen Rad-/Reifendurchmessern einstellbar ist.

9. Fahrradständer (10) nach Anspruch 8,
**dadurch gekennzeichnet, dass**
wenigstens eines der beiden Verbindungselemente (17, 17') des zweiten Teilbereichs (11) der Hauptstange (1) mit der Hauptstange (1) und der Hilfsstange (3) lösbar verbunden ist.

10. Fahrradständer (10) nach einem der Ansprüche 8 oder 9,
**dadurch gekennzeichnet, dass**
die Verbindungselemente (17, 17', 17") in verschiedenen Längen bereitgestellt sind oder die Verbindungselemente (17, 17', 17") zweiteilig sind und vorzugsweise wenigstens ein Teil davon in verschiedenen Längen bereitgestellt ist.

11. Fahrradständer (10) nach Anspruch 10,
**dadurch gekennzeichnet, dass**
die beiden Teile des zweiteiligen Verbindungselements (17, 17', 17") derart ineinander eingreifen, dass die Länge des Verbindungselements (17, 17', 17") in teleskopierbarer Weise veränderbar ist.

12. Fahrradständer (10) nach einem der vorhergehenden Ansprüche,
**dadurch gekennzeichnet, dass**
sich die Haupt- und Hilfsstange (1, 3) in deren Formgebung gleichen.

## Claims

1. Bicycle stand (10), in particular bicycle display stand, with a free-standing and self-supporting stand design (7) for holding a wheel of a bicycle (13), wherein a support element (5) for supporting the second wheel of the bicycle (13) by means of a support rod (4) with the support element (5) at one end is connectable to the stand design (7) so that the bicycle stand (10) provides two positions for supporting the bicycle (13), that is a horizontal bicycle supporting position and a vertical bicycle supporting position, wherein
- with the horizontal bicycle holding position, the longitudinal extension of the bicycle is substantially horizontal and the wheel (14; 22) or the second wheel (22; 14) of the bicycle (13) is held in an almost upright position by the stand design (7),
- with the vertical bicycle holding position, the longitudinal extension of the bicycle (13) is substantially vertical and the wheel (14; 22) or the second wheel (22; 14) of the bicycle (13) is supported by the stand design (7) and the second wheel (22; 14) or the wheel (14; 22) of the bicycle (13) is supported by the support element (5), and
- the support element (5) and the support rod (4) are linearly adjustable in height,
wherein the stand assembly (7) comprises:
- at least one crossbar (2),
- a main rod (1) attached to an attachment point (6) of one crossbar (2) and extending in two directions from the attachment point (6), wherein
- an angle (12) formed between the sections (9, 11) of the main rod (1) extending away from the attachment point (6) is less than or equal to 90°,
- a first section (9) of the main rod (1) is straight and extends substantially vertically, and
- a second section (11) of the main rod (1) has a bend, and
- an auxiliary rod (3) arranged in a way that the wheel or the second wheel of the bicycle (13) can be held between the main and auxiliary rods (1, 3),
and wherein the main rod (1) has a cavity in the vertical extension thereof which is adapted to hold the support rod (4) in such a manner that a pull-out distance (15) between the end of the main rod (1) and the end of the support rod having the support element (5) is adjustable,
**characterised in that**
the auxiliary rod (3) has a cavity which corresponds to that of the main rod (1) and is suitable for holding the support rod (4).

2. Bicycle stand (10) according to claim 1,
**characterised in that**
the support element (5) is a hook element (5) which can engage in a region (23) of the wheel or of the second wheel of the bicycle (13) defined by two adjacent spokes (24) and the rim (25) of the wheel or of the second wheel.

3. Bicycle stand (10) according to any of the previous claims,
**characterised in that**
with the vertical bicycle holding position, the stand design (7) is adapted to hold the rear wheel (22) or the front wheel (14) of the bicycle (13) and the support element (5) is adapted to engage in the front wheel (14) or the rear wheel (22) of the bicycle (13).

4. Bicycle stand (10) according to any of the previous claims,
**characterised in that**
fastening elements (16) are provided to fix the support rod (4) when the extension distance (15) is set.

5. Bicycle stand (10) according to any of the previous claims,
**characterised in that**
the main rod (1) and the auxiliary rod (3) are connected by means of at least one connecting element (17, 17', 17"), the length of which is variable, and/or several connecting elements (17, 17', 17") of variable length are provided.

6. Bicycle stand (10) according to claim 5,
**characterised in that**
the main and auxiliary rods (1, 3) are connected to the crossbar (2) at a respective attachment point (6), wherein the spacing (21) of the attachment points (6) and consequently the spacing (21) between the main and auxiliary rods (1, 3) is variable and preferably substantially coincides with the length of the connecting element or elements (17, 17', 17").

7. Bicycle stand (10) according to any of the previous claims,
**characterised in that**
the main rod (1) is reinforced with a stay (18) attached thereto, the stay (18) connecting the first (9) and the second section (11) of the main rod (1).

8. Bicycle stand (10) according to any of claims 5 to 7,
**characterised in that**
two connecting elements (17, 17') connect the second section of the main rod (1) to the auxiliary rod (3) and the distance (20) between the connecting elements (17, 17') is adjustable to adapt the bicycle stand (10) to accommodate different wheel/tyre diameters.

9. Bicycle stand (10) according to claim 8,
**characterised in that**
at least one of the two connecting elements (17, 17') of the second section (11) of the main rod (1) is detachably connected to the main rod (1) and the auxiliary rod (3).

10. Bicycle stand (10) according to any of claims 8 or 9,
**characterised in that**
the connecting elements (17, 17', 17") are provided in different lengths or connecting elements (17, 17', 17") are two-part and preferably at least one part thereof is provided in different lengths.

11. Bicycle stand (10) according to claim 10,
**characterised in that**
the two parts of the two-part connecting element (17, 17', 17") engage in one another in such a way that the length of the connecting element (17, 17', 17") can be changed in a telescopic manner.

12. Bicycle stand (10) according to any of the previous claims,
**characterised in that**
the main rod and auxiliary rod (1, 3) are similar in shape.

## Revendications

1. Support de vélo (10), en particulier présentoir de vélo, avec un agencement de support (7) autostable et autoportant pour recevoir une roue de vélo (13),
un élément de support (5) pour supporter une autre roue du vélo (13) au moyen d'une tige de maintien (4) présentant à une extrémité l'élément de support (5) qui peut être relié à l'agencement de support (7) de sorte que le support de vélo (10) offre deux positions pour le support du vélo (13), une position de retenue horizontale du vélo et une position de retenue verticale du vélo,
- dans la position de retenue horizontale du vélo, l'extension longitudinale du vélo s'étendant essentiellement à l'horizontale et la roue (14, 22) ou l'autre roue (22, 14) du vélo (13) étant supportée dans une position approximativement verticale par l'agencement de support (7),
- dans la position de retenue verticale du vélo, l'extension longitudinale du vélo (13) s'étendant essentiellement à la verticale et la roue (14, 22) ou l'autre roue (22, 14) du vélo (13) étant supportée par l'agencement de support (7) et l'autre roue (22, 14) ou la roue (14, 22) du vélo (13) par l'élément de support (5), et
- l'élément de support (5) et la tige de maintien (4) étant linéairement réglables en hauteur,
l'agencement de support (7) comprenant :
- au moins une tige transversale (2),
- une tige principale (1) fixée à un point de fixation (6) de l'une tige transversale (2), ladite tige transversale s'étendant dans deux directions à partir du point de fixation (6),
- un angle (12) qui est formé entre les sections (9, 11) de la tige principale (1) partant du point de fixation (6) étant inférieur ou égal à 90°,
- une première section (9) de la tige principale (1) étant droite et s'étendant essentiellement à la verticale et
- une deuxième section (11) de la tige principale (1) présentant un coude, et
- une tige auxiliaire (3) qui est disposée de sorte à ce que la roue ou l'autre roue du vélo (13) puisse être reçue entre la tige principale et la tige auxiliaire (1, 3),
et la tige principale (1) présentant dans son extension verticale un espace creux configuré pour recevoir la tige de maintien (4) de sorte qu'une distance télescopique (15) est réglable entre l'extrémité de la tige principale (1) et l'extrémité de la tige de maintien (4) présentant l'élément de support (5),
**caractérisé en ce que**
la tige auxiliaire (3) présente un espace creux qui correspond à celui de la tige principale (1) et qui est adapté pour recevoir la tige de maintien (4).

2. Support de vélo (10) selon la revendication 1,
**caractérisé en ce que**
l'élément de support (5) est un élément en crochet (5) qui peut s'engrener dans une zone (23) de la roue ou de l'autre roue du vélo (13) qui est définie par deux rayons voisins (24) et la jante de la roue ou de l'autre roue.

3. Support de vélo (10) selon l'une quelconque des revendications précédentes,
**caractérisé en ce que**
dans la position de retenue verticale du vélo, l'agencement de support (7) est configuré pour recevoir la roue arrière (22) ou la roue avant (14) du vélo (13), et **en ce que** l'élément de support (5) est configuré pour s'engrener dans la roue avant (14) ou la roue arrière (22) du vélo.

4. Support de vélo (10) selon l'une quelconque des revendications précédentes,
**caractérisé en ce que**
des moyens de fixation (16) sont prévus pour fixer la tige de maintien (4) lorsque la distance télescopique (15) est réglée.

5. Support de vélo (10) selon l'une quelconque des revendications précédentes,
**caractérisé en ce que**,
la tige principale (1) et la tige auxiliaire (3) sont reliées entre elles au moyen d'au moins un élément de liaison (17, 17', 17") dont la longueur est modifiable, et/ou plusieurs éléments de liaison (17, 17', 17") de longueur variable sont fournis.

6. Support de vélo (10) selon la revendication 5,
**caractérisé en ce que**
la tige principale et la tige auxiliaire (1, 3) sont reliées à la tige transversale (2) au niveau d'un point de fixation respectif (6), l'écart (21) des points de fixation (6) et donc l'écart (21) entre la tige principale et la tige auxiliaire (1, 3) étant modifiable et de préférence coïncidant avec la longueur du ou des plusieurs éléments de liaison (17, 17', 17").

7. Support de vélo (10) selon l'une quelconque des revendications précédentes,
**caractérisé en ce que**
la tige principale (1) est renforcée par un montant appliqué sur celle-ci, le montant (18) reliant la première section (9) et la deuxième section (11) de la tige principale (1).

8. Support de vélo (10) selon l'une des revendications 5 à 7,
**caractérisé en ce que**
deux éléments de liaison (17, 17') relient la deuxième section de la tige principale (1) à la tige auxiliaire (3) et la distance (20) des éléments de liaison (17, 17') entre eux est réglable afin d'adapter le support de vélo (10) à la réception de différents diamètres de roues/pneus.

9. Support de vélo (10) selon la revendication 8,
**caractérisé en ce que**
au moins l'un des deux éléments de liaison (17, 17') de la deuxième section (11) de la tige principale (1) est relié de manière détachable à la tige principale (1) et à la tige auxiliaire (3).

10. Support de vélo (10) selon la revendication 8 ou 9,
**caractérisé en ce que**
les éléments de liaison (17, 17', 17") sont fournis en différentes longueurs ou les éléments de liaison (17, 17', 17") sont en deux parties et de préférence au moins une partie de celles-ci est fournie en différentes longueurs.

11. Support de vélo (10) selon la revendication 10,
**caractérisé en ce que**
les deux parties de l'élément de liaison en deux parties (17, 17', 17") s'engrènent l'une dans l'autre de sorte que la longueur de l'élément de liaison (17, 17', 17") est modifiable de manière télescopique.

12. Support de vélo (10) selon l'une quelconque des revendications précédentes,
**caractérisé en ce que**
la tige principale et la tige auxiliaire (1, 3) sont de conception semblable.
